# EUROPÄISCHE PATENTANMELDUNG

(11) **EP 0 524 345 A1**
(43) Veröffentlichungstag der Anmeldung: **27.01.1993**
(21) Anmeldenummer: 91121415.3
(22) Anmeldetag: 13.12.1991
(51) Int. Cl.: B60R 22/00, B60R 22/14

(54) **Vorrichtung zum Schutze einer Person vor Einwirkungen des Sicherheitsgurtes im Brust- und Halsbereich**

(30) Priorität: 26.07.1991 DE 9109235 U
(71) Anmelder: Backfisch, Kurt, D-34277 Fuldabrück (DE); Geyer, Hans Jürgen, D-34131 Kassel (DE)
(72) Erfinder: Backfisch, Kurt, W-3501 Fuldabrück 1 (DE)
(74) Vertreter: Walther, Horst, Dipl.-Ing.

(57) **Zusammenfassung**

Vorrichtung zum Schutze einer Person vor Einwirkungen des Sicherheitsgurtes im Brust- und Halsbereich, wobei ein elastisches Polsterteil (1) mit einem Führungsmittel für den Sicherheitsgurt vorgesehen ist.

## Beschreibung

Die Erfindung betrifft eine Vorrichtung zum Schutze einer Person vor Einwirkungen des Sicherheitsgurtes im Brust- oder Halsbereich.

Es ist bekannt, daß angelegte Sicherheitsgurte mitunter eine erhebliche Druckbelastung auf den Träger ausüben. Hinzu kommt, daß bei den unvermeidlichen Körperbewegungen der Gurt an den Kleidungsstücken reibt mit der Folge, daß Beschädigungen von Kleidungsstücken nicht ausgeschlossen sind.

Schließlich ist nicht auszuschließen, daß der Sicherheitsgurt bei ungünstiger Lage auch einen gewissen Druck im Halsbereich ausüben kann, was bei entsprechender Zugbelastung auf den Sicherheitsgurt zu gesundheitlichen Schäden führen kann.

Der Erfindung liegt daher die Aufgabe zugrunde, eine Vorrichtung zu schaffen, die das Tragen eines Sicherheitsgurtes erleichtert, insbesondere die Druckbelastung vermindert und damit die Person wesentlich vor schädlichen Einwirkungen des Sicherheitsgurtes im Brust- und Halsbereich bewahrt.

Die erfindungsgemäße Vorrichtung ist gekennzeichnet durch ein elastisches Polsterteil mit einem Führungsmittel für den Sicherheitsgurt. Das Polsterteil besteht dabei aus Schaumstoff, insbesondere einem geschlossenporigen PE-Schaum. Im einzelnen ist die Ausbildung dabei so getroffen, daß das Polsterteil Plattenform besitzt, welche seitliche Ränder aufweist, die über die Plattenebene überstehen. Dadurch erhält der Sicherheitsgurt in dem Polsterteil eine Führung.

Weiterhin sind in dem Polsterteil Öffnungen angebracht, um eine entsprechende Belüftung sicherzustellen.

Durch diese Ausbildung der Vorrichtung ist mithin erreicht, daß der Gurt wegen des vorzugsweise länglichen Polsterteils aus Schaumstoff eine entsprechend geringere Druckbelastung ausübt und die unvermeidlichen Bewegungen des Gurtes bei entsprechenden Körperbewegungen nicht unmittelbar auf die Kleidung übertragen werden, sondern sich im Führungsmittel abspielen.
Darüber hinaus sorgt die spezielle Ausbildung des Polsterteils in Plattenform mit seitlichen Rändern dafür, daß der Sicherheitsgurt nicht unmittelbar auf den Halsbereich oder den Brustbereich einwirken kann, und Verletzungen insbesondere der Halsschlagader vermieden werden.

Darüber hinaus ist von Vorteil, daß der Polsterteil längs des Gurtes verschoben werden kann, so daß der Träger einer solchen Vorrichtung selbst die optimale Lage dieser Vorrichtung bestimmen kann. Die optimale Lage des länglichen Polsterteils ist aber in jedem Fall dann gegeben, wenn es sich unter dem Gurt im Bereich der Halsschlagader befindet. Das Gleiten des Polsterteils am Gurt wird im wesentlichen durch das Material in Form des geschlossenporigen PE-Schaumstoffes gewährleistet. Hingegen wird durch die Anordnung von Noppen an der Unterseite des Polsterteils und auch durch das Material des Polsterteils selbst das Gleiten auf der Bekleidung verhindert.

Damit der Sicherheitsgurt sicher in dem Polsterteil geführt ist, besitzt der Polsterteil Leitmittel für den Sicherheitsgurt. Diese Leitmittel sind nach Art eines Gurtes ausgebildet, der den Sicherheitsgurt über die gesamte Breite überdeckt.
Damit die Leitmittel gelöst werden können, können sie zweiteilig ausgebildet sein und mit Hilfe von Verbindungsmitteln, z.B. von Druckknöpfen oder einem Klettverschluß, verschließbar sein.

In der Zeichnung ist eine beispielsweise Ausführungsform dargestellt.
- Fig.1: zeigt in perspektivischer Darstellung die erfindungsgemäße Vorrichtung;
- Fig.2: zeigt die Vorrichtung zusammen mit einer Person und dem Sicherheitsgurt.

Der elastische Polsterteil ist insgesamt mit 1 bezeichnet. Er besitzt im wesentlichen die Form einer Platte 2, welche die seitlichen Ränder 3 und 4 aufweist, die über der Plattenebene 2a überstehen.

Durch diese Ausbildung des Polsterteils in Form einer Platte mit den seitlichen Rändern wird ein Führungsmittel für den Sicherheitsgurt gebildet, so daß der Sicherheitsgurt zwangsgeführt ist.

In dem Polsterteil können Öffnungen 8 angebracht sein, um eine gewisse Belüftung sicherzustellen. Unten am Polsterteil befinden sich Noppen 9, die ein Rutschen des Polsterteils auf der Kleidung verhindern.

Damit der Sicherheitsgurt aus dem Polsterteil nicht herausspringen kann, sind Leitmittel 5 und 6 vorgesehen, die im wesentlichen aus einem Gurt bestehen können. In einer bevorzugten Ausführungsform ist dieser Gurt 5 zweiteilig 5a bzw. 5b ausgebildet, so daß der Gurt lösbar ist. Zur Verbindung der beiden Gurtteile 5a und 5b kann ein üblicher Klettverschluß dienen.

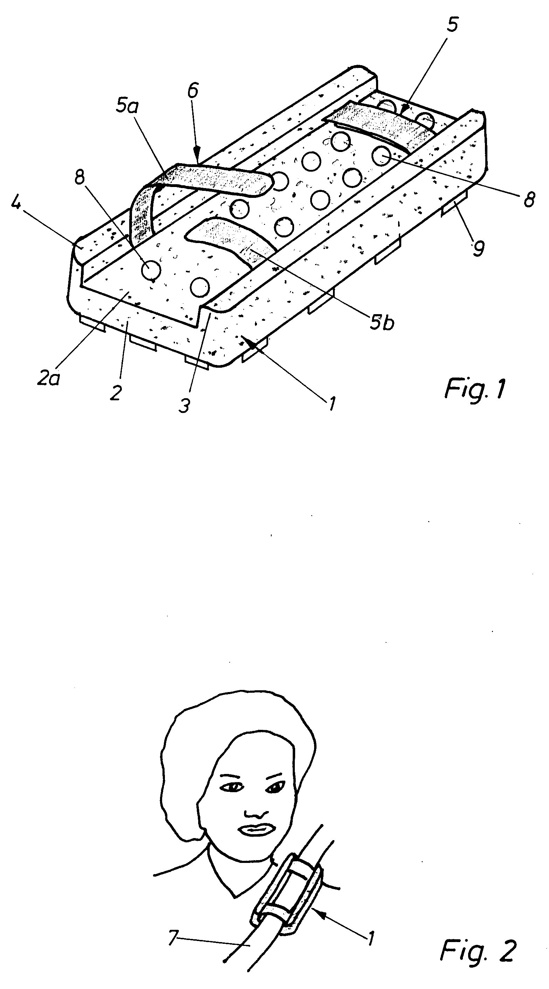

Fig.2 verdeutlicht die Lage des elastischen Polsterteils 1 in bezug auf den Gurt 7. Man erkennt, daß der Polsterteil längs des Gurtes verschoben werden kann, so daß der Träger sich selbst die optimale Lage einstellen kann. Man erkennt ferner, daß durch die Ausbildung des Polsterteils in Plattenform mit den seitlichen Rändern sichergestellt ist, daß der Gurt nicht unmittelbar auf den Halsbereich oder den Brustbereich einwirken kann.

## Patentansprüche

1. Vorrichtung zum Schutze einer Person vor Einwirkungen des Sicherheitsgurtes im Brust- und Halsbereich,
**gekennzeichnet durch**
ein elastisches Polsterteil (1) mit einem Führungsmittel für den Sicherheitsgurt.

2. Vorrichtung nach Anspruch 1,
**dadurch gekennzeichnet,** daß das Polsterteil aus Schaumstoff besteht.

3. Vorrichtung nach Anspruch 1,
**dadurch gekennzeichnet,** daß der Polsterteil Plattenform (2) besitzt, welche seitliche Ränder (3 und 4) aufweist, die über der Plattenebene (2a) überstehen.

4. Vorrichtung nach Anspruch 3,
**dadurch gekennzeichnet,** daß in der Platte Öffnungen (8) angebracht sind.

5. Vorrichtung nach Anspruch 1,
**dadurch gekennzeichnet,** daß der Polsterteil (1) Leitmittel (5 und 6) für den Sicherheitsgurt aufweist.

6. Vorrichtung nach Anspruch 5,
**dadurch gekennzeichnet,** daß das Leitmittel nach Art eines Gurtes ausgebildet ist.

7. Vorrichtung nach Anspruch 6,
**dadurch gekennzeichnet,** daß der Gurt zweiteilig ausgebildet ist und die Gurtteile (5a, 5b) durch einen Verbindungsmittel, z.B. einen Klettverschluß oder Druckknöpfe miteinander verschließbar sind.

8. Vorrichtung nach Anspruch 1
**dadurch gekennzeichnet,** daß das Polsterteil länglich ausgebildet ist.

9. Vorrichtung nach Anspruch 1
**dadurch gekennzeichnet,** daß das Polsterteil auf der Unterseite Noppen (9) aufweist.
